# EUROPEAN PATENT SPECIFICATION

(11) **EP 4 247 905 B1**
(45) Date of publication and mention of the grant of the patent: **04.12.2024**
(21) Application number: 20811575.8
(22) Date of filing: 20.11.2020
(51) Int. Cl.: C09D 11/102, C09D 11/52, C09D 11/30, C08G 73/00, H01B 1/12, C09D 5/24

(54) **N-TYPE CONDUCTIVE COMPOSITION COMPRISING A RIGID CONJUGATED POLYMER**
N-LEITENDE ZUSAMMENSETZUNG MIT EINEM STARREN KONJUGIERTEN POLYMER
COMPOSITION CONDUCTRICE DE TYPE N COMPRENANT UN POLYMÈRE CONJUGUÉ RIGIDE

(43) Date of publication of application: 27.09.2023
(73) Proprietor: N-Ink AB, 602 21 Norrköping (SE)
(72) Inventor: FABIANO, Simone, 603 80 Norrköping (SE); BERGGREN, Magnus, 602 18 Norrköping (SE); STOECKEL, Marc-Antoine, 602 33 Norrköping (SE); YANG, Chi-Yuan, 602 33 Norrköping (SE)
(74) Representative: AWA Sweden AB
(86) International application number: PCT/EP2020/082821
(87) International publication number: WO 2022/106018

(56) References cited:
- EP-A1- 3 422 450
- US-A1- 2017 222 151
- HENGDA SUN ET AL: "n-Type organic electrochemical transistors: materials and challenges", JOURNAL OF MATERIALS CHEMISTRY C, vol. 6, no. 44, 31 August 2018 (2018-08-31), GB, pages 11778 - 11784, XP055583044, ISSN: 2050-7526, DOI: 10.1039/C8TC03185A
- HENGDA SUN ET AL: "Complementary Logic Circuits Based on High-Performance n-Type Organic Electrochemical Transistors", ADVANCED MATERIALS, vol. 30, no. 9, 10 January 2018 (2018-01-10), pages 1704916, XP055583029, ISSN: 0935-9648, DOI: 10.1002/adma.201704916
- XU KAI ET AL: "Ground-state electron transfer in all-polymer donor-acceptor heterojunctions", NATURE MATERIALS, NATURE PUB. GROUP, LONDON, vol. 19, no. 7, 9 March 2020 (2020-03-09), pages 738 - 744, XP037162326, ISSN: 1476-1122, [retrieved on 20200309], DOI: 10.1038/S41563-020-0618-7

## Description

### TECHNICAL FIELD

The present invention relates to an n-type conductive composition comprising a rigid conjugated polymer having a dihedral angle from 0° to 20° and an n-type conductive ink comprising such a composition. Further, the present invention relates to an organic optical or electronic device comprising such a composition.

### BACKGROUND OF THE INVENTION

With their versatility, semi-conductive and conductive polymers came up as promising solution for bio- and opto-electronic applications due to their mechanical flexibility and high electrical conductivity while being compatible with large-area deposition methods, such as inkjet printing or spray-coating techniques. Inkjet printing is recognized as an efficient method for direct deposition of functional materials on flexible substrates in predesigned patterns owing to simple processing, low cost and higher adaptability for large scale fabrication of electronic devices, sensors, light emitting diodes, etc. However, inks used in inkjet printing mostly consist of metal nanoparticles and carbon materials such as graphene and carbon nanotubes, and few polymeric inks have been developed so far.

The large-area deposition techniques are greatly compatible with the use of dopants, allowing organic conductive polymers to reach metallic behaviors while lowering their charge injection barriers. This occurs via chemical or electrochemical processes upon addition of a molecular or polymeric doping entity to a conjugated polymeric matrix, mainly involving charge-transfer processes or acid-base exchanges. Depending on the combination of polymer and dopant used, p- or n-doping can occur. Both types may be employed in organic photovoltaics (OPV) or organic light-emitting diodes (OLED) and are required when considering complementary circuitry and devices. Such material should be easy to process and insoluble in common organic solvents used in multistep device fabrication. While p-type (hole-transporting) organic polymers have been massively developed and well-studied, led by the omnipresent commercially-available water-soluble p-type PEDOT-PSS in which one moiety (i.e. the poly(3,4-ethylenedioxythiophene), PEDOT) is doped through the negative charges induced by the sulfonates from the other compound (i.e. the poly(styrenesulfonate), PSS), only few examples of n-type (electron-transporting) conductive polymers that can be doped to high conductivity (>10 S/cm) after deposition have been reported so far, owing to their lack of thermal, ambient and solvent stability as well as reliable solution processability, which often results in poor device performance. Further, most n-type conductive polymers can only be processed in halogenated solvents that are harmful for the environment.

As mentioned above, both p-type and n-type inks are needed in OPVs, OLEDs, organic thermoelectric generators (OTGs), organic supercapacitors, and fuel cells. There is currently no n-type polymeric ink that is processable from water-based or alcohol-based solution, that is highly-conductive (> 5 S/cm), stable in air and at elevated temperatures and resistant to solvents in order to be over-printable. All n-doped polymeric inks reported to date are based on a semiconducting polymer and a small molecule acting as dopant. The small dopant molecules are prone to diffuse and aggregate, especially at elevated temperatures and are typically unintentionally removed when a further layer is disposed on the layer comprising the n-type ink, making the system highly unstable. In addition, very few n-doped polymers are soluble in water or alcohol.

Various design and n-doping strategies, including planarization and stiffening of the polymer backbone, engineering of the donor-acceptor character, control of the small-molecule dopant counterion-polymer side-chain miscibility, all-polymer blends based on ground-state electron transfer, are being explored. Despite great progress, the performance of n-doped conducting polymers is not yet at the level of the p-doped polymers. In other words, no n-type equivalents to PEDOT:PSS currently exist. Rigid conjugated polymers are known from for example Hengda Sun et al, Journals of Material Chemistry C, vol. 6, no 44, 20018-08-31, pages 11778-11784. Cationic polymers are for example disclosed in US 2017/222151.

In view of the above, there is a need to provide an n-type conductive composition having improved stability and high electrical conductivity. Further, it is desirable that the n-type conductive composition is suitable for deposition by large-area techniques, and that it is able to withstand elevated temperatures and a variety of solvents.

### SUMMARY OF THE INVENTION

In view of the above, the present invention aims to solve the problems of the prior art. To this end, the present invention relates to an n-type conductive composition comprising a rigid conjugated polymer having a dihedral angle from 0° to 20° and an n-type polymeric cation.

The term "rigid" in the context of the present invention means a conjugated polymer having a dihedral angle from 0° to 20°, preferably below 10°. The term "dihedral angle" in the context of the present invention is the angle between repeating units of the conjugated polymer. As mentioned above, the rigidity of the conjugated polymers of the present invention is a prerequisite for excellent charge transport ability combined with high stability, since torsional defects partially break the conjugation along the polymer backbone, resulting in decreased electronic delocalization, widened band gaps, increased numbers of trapped charges, and less effective intermolecular coupling.

The rigid conjugated polymer of the present invention may be an n-type rigid conjugated polymer.

The rigid conjugated polymers in the context of the present invention may have lowest unoccupied molecular orbital (LUMO) energy level E_{LUMO} below -3.9 eV. It should be understood that the term "below" in relation to a negative value is a negative value having a greater absolute value. In other words, the term "below" in the context of the present invention implies values being positioned to the left from -3.9 on the number line, e.g. -4.2, -5.8 and so forth.

Rigid conjugated polymers, in which all the backbone units on the polymer main-chain are π-conjugated and fused, have been recognized as being particularly suitable in optical and electronic applications. These polymers have attracted great interest owing to their intriguing properties, remarkable chemical and thermal stability, and potential suitability as functional organic materials. In addition, they are distinct from conventional conjugated polymers in that the fused-ring constitution restricts the free torsional motion between the aromatic units along the backbone. Because of the diminished torsional defects, rigid conjugated polymers with fully coplanar backbones provide coherent π-conjugation, fast intra-chain charge transport, long exciton diffusion length, and strong π-π stacking interactions.

Since rigid conjugated polymers possess planar backbones with optimum π-electron delocalization and are free of torsional defects, they may be considered to be analogous to graphene nanoribbons, which combine the excellent charge transport property of graphene with opened band gaps as high-performance semi-conductive materials. Furthermore, rigid conjugated polymers display potentially high thermal and optical stability as well as high resistance to chemical degradation. Such combination of unique properties of rigid conjugated polymers make them promising candidates for a wide range of applications.

Particularly suitable type of rigid conjugated polymers according to the present invention is conjugated ladder or ladder-type polymers. In general, ladder polymers are multiple stranded polymers with periodic linkages connecting the strands, resembling the rails and rungs of a ladder, and giving an uninterrupted sequence of adjacent rings that share two or more atoms. Conjugated ladder polymers are a specific subtype of ladder polymers in which all the fused rings in the backbone are π-conjugated. In addition, they are distinct from conventional conjugated polymers in that the fused-ring constitution restricts the free torsional motion in between the aromatic units along the backbone.

Stemming from the fused backbone, conjugated ladder polymers exhibit extraordinary thermal, chemical, and mechanical stability. Because of the diminished torsional defects, conjugated ladder polymers with fully coplanar backbones provide coherent π-conjugation, fast intra-chain charge transport, long exciton diffusion length, and strong π-π stacking interactions.

Examples of conjugated ladder or ladder-type polymers include poly(benzimidazobenzophenanthroline) (BBL), polyquinoxaline (PQL), poly(phenthiazine) (PTL), poly(phenooxazine) (POL), poly(p-phenylene) ladder polymers (LPPPs) and carbazole-fluorene-based ladder polymers.

The rigid conjugated polymer of the present invention may be a conjugated ladder-type polymer. In particular, the rigid conjugated polymer of the present invention may be BBL, comprising from 2 to 10000, preferably 2 to 100, more preferably 30 to 50 repetitive units (n). 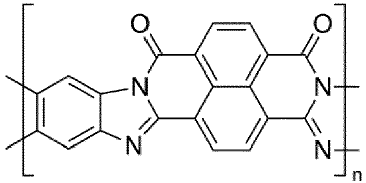 Poly(benzimidazobenzophenanthroline), BBL

The n-type polymeric cation according to the present invention is preferably an n-type polymeric dopant. The n-type polymeric dopant may be, linear polyethyleneimine (PEIₗᵢₙ), branched PEI (PEI_{bra}), ethoxylated PEI (PEIE) or mixtures thereof. The number of repetitive units in the n-type polymeric dopant may be from 2 to 10000, preferably from 5 to 1000, more preferably from 50 to 100 repetitive units.

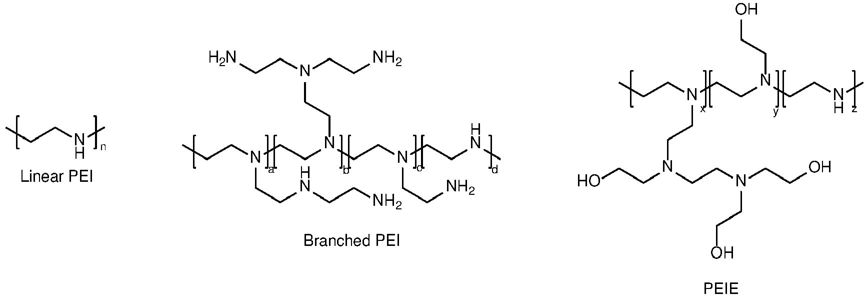

When the n-type polymeric dopant is branched PEI, a, b, c and d are positive integers, such that the sum of these integers is from 5 to 10000, preferably from 10 to 1000, more preferably from 50 to 100.

When the n-type polymeric dopant is ethoxylated PEI, x, y and z are positive integers, such that the sum of these integers is from 5 to 10000, preferably from 10 to 1000, more preferably from 50 to 100.

The mass ratio polymeric cation/(polymeric cation + rigid conjugated polymer) in the n-type conductive composition of the present invention may be from 0.01% to 99.99%, preferably from 0.1% to 90%, more preferably from 1% to 75%, most preferably from 20% to 50%.

The n-type conductive composition according to the present invention may be processable in air through simple spray-coating. After thermal activation, the n-type conductive composition, being in the form of a thermally annealed thin film, shows an electrical conductivity as high as 8 S/cm, as well as excellent thermal and ambient stability, as will be discussed in detail below. Further, it has been found that the high conductivity performance can be retained even after washing the thin films with common organic solvents, which is particularly important for the development of multi-stack optoelectronic devices. The composition of the present invention may be used as a printed active layer in thermoelectric generators with record high power output, as will be shown below. The composition of the present invention may further be implemented as a mixed ion-electron conductor in organic electrochemical transistors (OECTs) and demonstrates an n-type depletion mode of operation as well as new logic devices when coupled to PEDOT:PSS-based OECTs.

The n-type conductive composition according to the present invention may have a conductivity of at least 10⁻³ S/cm, preferably at least 1 S/cm.

As mentioned above, the n-type conductive composition may be processable using large-area techniques, e.g. inkjet printing or spray-coating techniques. To this end, the present invention relates to an n-type conductive ink comprising the n-type conductive composition as described above, and a non-halogenated polar solvent. This n-type conductive ink is suitable for large scale deposition methods, such as the spray-coating or inkjet printing technique. Due to its nature, this ink can be processed in air, and the low boiling point of the solvent employed does not require any thermal treatment for its drying.

The n-type conductive ink of the present invention may thus be spray-coated in air and ambient temperature, forming the film having thickness of from 2 nm to 1 mm. Such a film may exhibit electrical conductivity in the order of 0.1 S/cm. Thermal annealing under inert atmosphere may be required in order to enable the doping. The thermal annealing may be performed at temperatures from 100°C to 300°C for periods from 1 min to 1200 min. Preferably, thermal annealing is performed at 150°C for 120 min or 200°C for 90 min. The film may be encapsulated prior to the thermal annealing.

The non-halogenated polar solvent may be a protic solvent, such as water, an alcohol or mixture thereof. The alcohol may be selected from the group consisting of methanol, ethanol, propan-1-ol, propan-2-ol (IPA), butan-1-ol, 2-methylpropan-1-ol, 2-methylpropan-2-ol, 2-methylbutan-2-ol, ethane-1,2-diol, 2-methoxyethan-1-ol, and 1-methoxypropan-2-ol or mixtures thereof, as illustrated below.

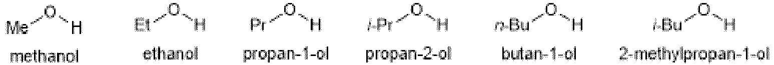

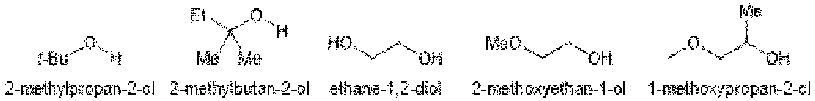

Preferably, the non-halogenated polar solvent is ethanol, IPA, methanol or mixtures thereof.

The concentration of the rigid conjugated polymer and the polymeric cation in the n-type conductive ink may be from 0.001 to 200 g/l, preferably from 0.01 to 10 g/l, more preferably from 0.05 to 1 g/l.

As mentioned above, the n-type conductive composition according to the present invention may be used in an organic optical or electronic device, such as OECTs, thermoelectric devices, ternary logic inverters, OPVs, OLEDs, organic supercapacitors, batteries, fuel cells, sensors and memories.

### BRIEF DESCRIPTION OF THE DRAWINGS

Embodiments of the invention will now be described by way of example with reference to the accompanying drawings, of which:
Fig. 1 shows ink particle size distribution determined by dynamic light scattering (DLS) analysis of BBL:PEIₗᵢₙ (a) and BBL:PEI_{bra} (b) ethanol-based ink.
Fig. 2 illustrates electrical conductivity of the n-type conductive composition of the present invention;
Fig. 3a depicts thermal annealing time vs annealing temperature;
Fig. 3b depicts comparison of the conductivity of pristine BBL and BBL:PEIₗᵢₙ before and after annealing;
Fig. 4 shows pre-annealing stability in terms of electrical conductivity of BBL:PEIₗᵢₙ films (50 wt% PEI content) stored in nitrogen atmosphere (a) or in air (b) directly after the spray-coating before thermal annealing;
Fig. 5 depicts thickness-dependence of the in-plane conductivity of BBL:PEIₗᵢₙ (a) and BBL:PEI_{bra} (b) with 50 wt% PEI content; and (c) out-of-plane conductivity of BBL:PEIₗᵢₙ film;
Fig. 6 illustrates evolution of conductivity of BBL:PEI in air for 24 hours and thermal stability of BBL:PEI subjected to a constant annealing of 200°C in nitrogen atmosphere over 24 hours;
Fig. 7 shows stability of the n-type conductive composition of the present invention over time;
Fig. 8 depicts Seebeck coefficient of the n-type conductive composition of the present invention as a function of dopant content;
Fig. 9 illustrates Seebeck coefficient thermal stability;
Fig. 10 shows stability of the n-type conductive composition of the present invention during heating-cooling cycles;
Fig. 11 illustrates shows stability of the n-type conductive composition of the present invention in contact with different solvents;
Fig. 12 depicts behavior of prior art n-type compositions in contact with different solvents;
Fig. 13 shows ohmic contact measurements;
Fig. 14 shows power factor of the n-type conductive composition of the present invention as function of dopant content;
Fig. 15 illustrates Peltier setup and thermoelectric module characteristics;
Figs. 16-18 show thermoelectric module characteristics;
Fig. 19 illustrates applications of the n-type conductive composition of the present invention;
Fig. 20 shows transfer and output OECT characteristics;
Fig. 21 illustrates OECT response time; and
Fig. 22 shows a ternary inverter comprising the n-type conductive composition of the present invention.

### DETAILED DESCRIPTION OF THE INVENTION

As mentioned above, the present invention provides an alcohol-based n-type conductive ink for printed electronics. In a particular embodiment that will be described in detail below, the n-type conductive ink is composed of the rigid conjugated ladder-type polymer poly(benzimidazobenzophenanthroline) (BBL) doped with poly(ethyleneimine) (PEI), an amine-based insulating polymer.

BBL (M_{w} = 60.5 kDa) was synthesized following the procedure described in the prior art (Arnold, F. E. & Deusen, R. L. V. Preparation and properties of high molecular weight, soluble oxobenz[de]imidazobenzimidazoisoquinoline ladder polymer. Macromolecules 2, 497-502 (1969)). Linear PEI (Mₙ = 2.5 kDa, PDI < 1.3), branched PEI (Mₙ = 10 kDa, PDI = 1.5), MSA, and ethanol were purchased from Sigma-Aldrich and used as received. PEDOT:PSS (Clevios PH1000) was purchased from Heraeus Holding GmbH.

The n-type conductive composition is prepared via the formulation of an ethanol-based BBL:PEI n-type conductive ink that is processable in air through simple spray-coating. After thermal activation, the n-type conductive composition comprising BBL:PEI, being in the form of a thin film shows an electrical conductivity as high as 8 S cm⁻¹, as well as excellent thermal and ambient stability. It was also found that the high conductivity performance can be retained even after washing the thin films with common organic solvents, which is particularly important for the development of multi-stack optoelectronic devices. It has been demonstrated that the n-type conductive composition of the present invention may be used as a printed active layer in thermoelectric generators with record high power output of 11 µW/m K².

While BBL is known to be only soluble in strong acids, such as methanesulfonic acid (MSA) or concentrated sulfuric acid, the n-type conductive ink is obtained through the dispersion of a BBL solution in MSA:TFA mixture into a large volume of ethanol under rapid stirring, leading to the formation of BBL nanoparticles to which PEI dissolved in ethanol is added to form the final conductive ink.

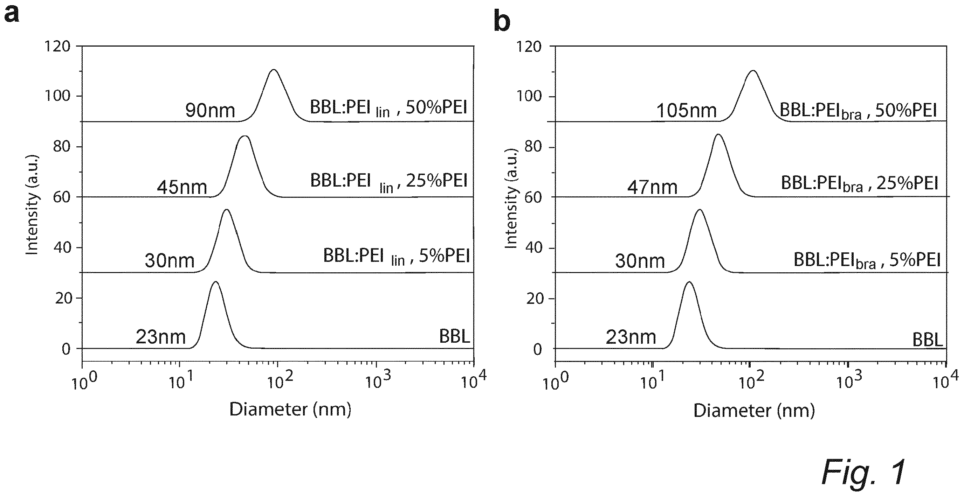

The BBL nanoparticles in a dispersion solution have a diameter of about 20 nm (Fig. 1). The BBL nanoparticles are then washed in ethanol and mixed with either linear PEI (PEIₗᵢₙ) or branched PEI (PEI_{bra}) at different mass ratios and sonicated in ultrasonic bath for 1 hour to obtain the ethanol-based all-polymer conductive ink. The resulting ethanol-based ink is composed of BBL:PEI nanoparticles with size of 30-100 nm, depending on the PEI content, as shown in Fig. 1.

This ink according to the present invention can be used with large scale deposition methods, such as the spray-coating technique. Due to its nature the n-type conductive ink can be processed in air, and the low boiling point of ethanol does not necessitate any thermal treatment for drying. However, a thermal annealing under inert atmosphere is needed to activate the doping process.

The following Figures will describe various characteristics of the films obtained as follows. BBL:PEI thin films were fabricated by spray-casting in air, by means of a standard HD-130 air-brush (0.3 mm) with atomization air pressure of 2 bar. After spray-casting, the BBL:PEI thin films were annealed at 140 °C for 2 hours in N₂ glove box or under vacuum to get the conducting film.

Electrical conductivity and Seebeck coefficient measurements were done in a nitrogen-filled glovebox using a Keithley 4200-SCS semiconductor characterization system. 3 nm of chromium as adhesive layer and 47 nm of gold where thermally evaporated on cleaned glass substrates, through a shadow mask, forming electrodes with a channel length/channel width of 30 µm/1000 µm for the electrical and 0.5 mm/15 mm for Seebeck coefficient characterizations.

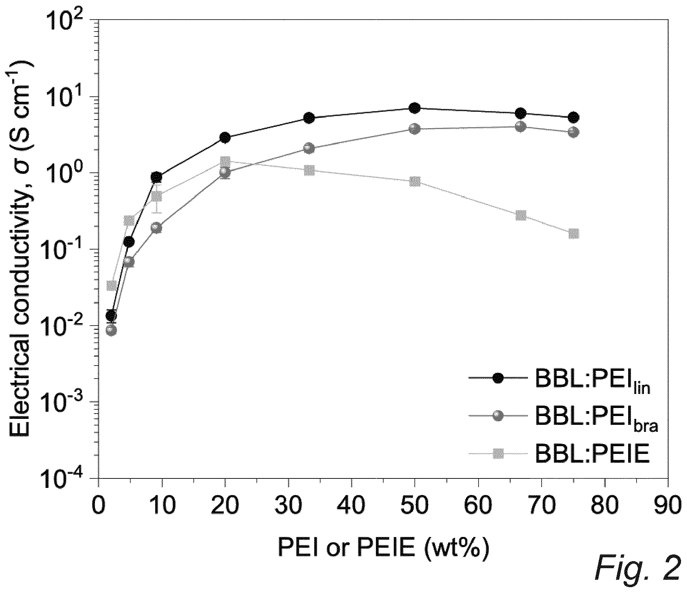

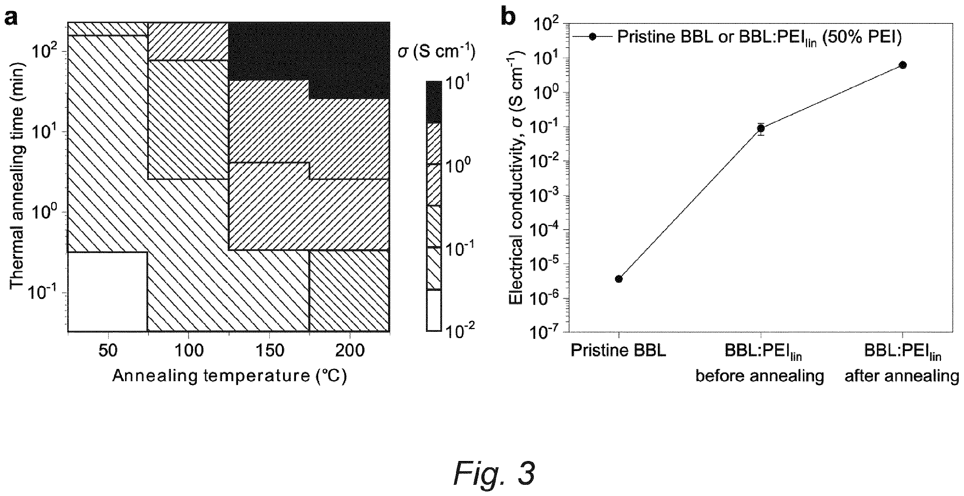

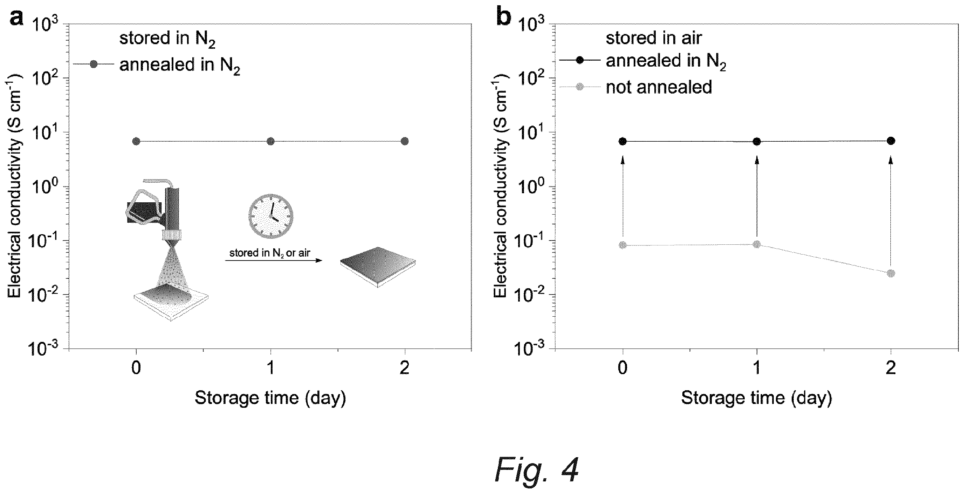

The electrical conductivity of BBL:PEI thin films as a function of PEI content is reported in Fig. 2. Pure BBL films have an electrical conductivity as low as 10⁻⁵ S/cm in their pristine state. When blended with PEI, the electrical conductivity increases to 0.10±0.02 S/cm at 5 wt% PEI and saturates to 7.7±0.5 S/cm for 50 wt% PEI. Because of the high density of electron-donating secondary amine groups in PEI, a 5 min thermal annealing at 150°C is enough to reach 1 S/cm n-type conductivity, whereas the maximum conductivity of 8 S/cm is obtained for longer annealing times (i.e. 150°C for 120 min or 200°C for 90 min, Fig. 3) which is achieved for blends with 1:1 weight ratio, i.e. 50 wt% PEI. For comparison, BBL films doped with branched PEI bearing primary, secondary, and tertiary amines obtained maximum conductivity values of 4.0±0.1 S/cm for 50 wt% PEI content. When BBL is doped with ethoxylated polyethylenimine (PEIE), it reaches a conductivity of 1.4±0.1 S/cm at BBL:PEIE 5:1, i.e. 20wt% PEIE, while higher PEIE content leads to a degradation of the electrical performance (Fig. 2). It is important to note that prior to the thermal annealing, the spray-coated films are totally stable for several days in air and do not suffer from any degradation of their conductivity, as depicted in Fig. 4. Electrical conductivity of BBL:PEIₗᵢₙ samples stored in nitrogen atmosphere (Fig. 4a) and in air (Fig. 4b) directly after the spray-casting for zero, one or two days before performing the thermal annealing to activate the doping confirms that no degradation of electrical conductivity is observed. These results show that BBL:PEI can be stored either in air or under inert atmosphere prior to the thermal annealing. While the conductivity of pristine BBL:PEIₗᵢₙ is slightly affected by the ambient conditions, an equal conductivity level is reached after annealing.

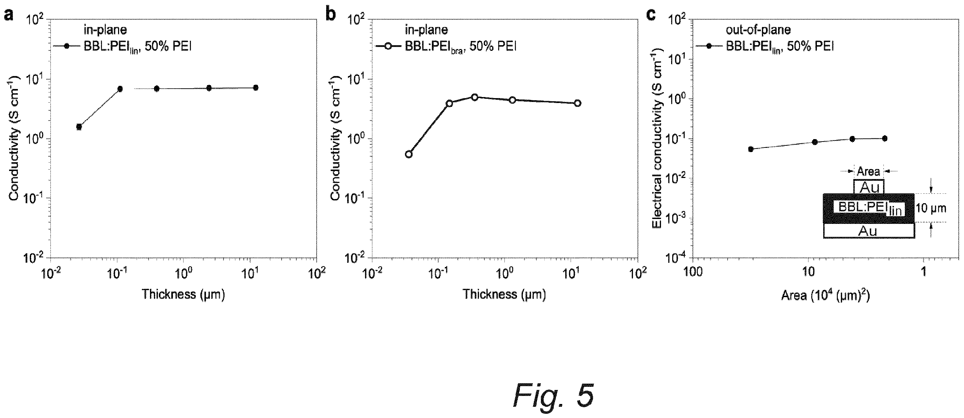

Further, effect of film thickness on the electrical conductivity was studied. The results are shown in Fig. 5. The conductivity is independent of film thickness (d) for d > 50 nm, remining at the level of ~6 S/cm, while it decreases to -1.5 S/cm when d approaches the BBL nanoparticle size, i.e. for 20-nm-thick samples. For both PEIₗᵢₙ and PEI_{bra}, thin-films in the order of 30 nm demonstrate quite poor performance, while thicker films have higher conductivities that are constant for BBL:PEIₗᵢₙ but slightly decreasing for BBL:PEI_{bra} (Figs 5a and 5b, respectively). However, even 20 nm thick films maintain an electrical conductivity of 1 S/cm, which is large enough for certain applications such as near-transparent charge extraction layers in solar cells. Interestingly, the out-of-plane electrical conductivity of a 10-µm-thick BBL:PEIₗᵢₙ film with different size of the gold electrodes of 0.1 S/cm is measured, which is less than 2 orders of magnitude smaller than the in-plane conductivity for the same sample (Fig. 5c).

This anisotropic conductivity is interpreted in terms of a percolating cluster model, developed for similar two-phase systems like PEDOT:PSS. The negatively charged BBL chains are preferentially ordered parallel to the substrate and are compensated by the long positively charged PEI chains, such that the latter are also expected to have a preferential order parallel to the substrate. This anisotropy favors the in-plane conductivity as also observed in the case of PEDOT:PSS.

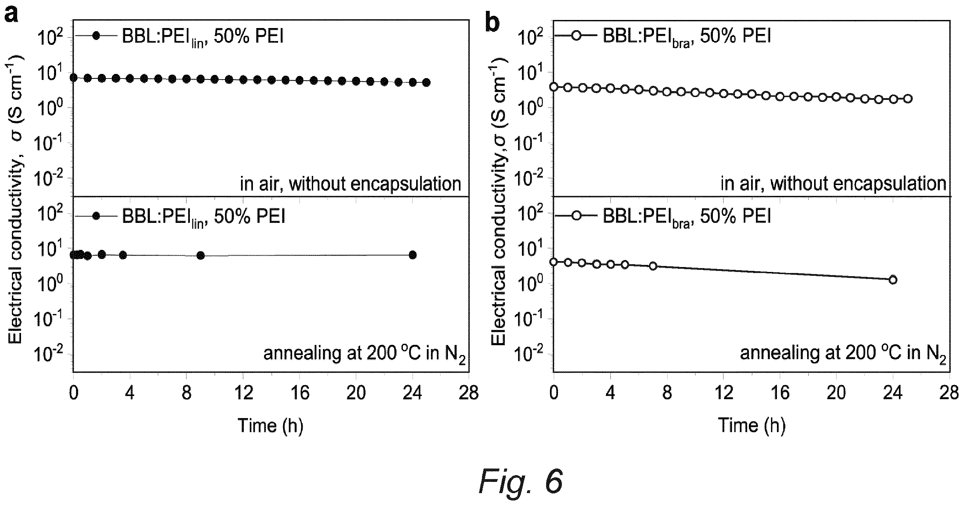

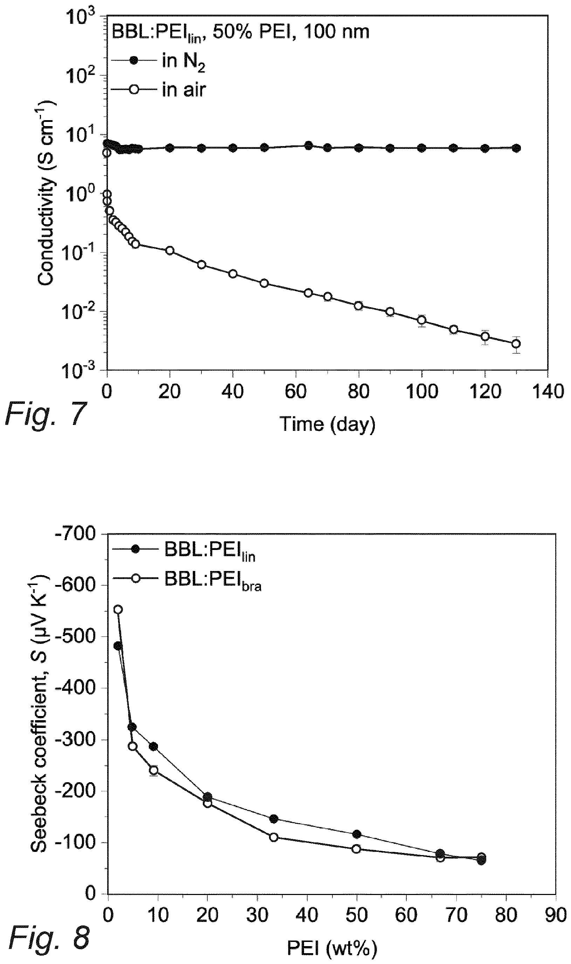

It has been found that the n-type conductive composition of the present invention, in a particular embodiment comprising BBL:PEI, shows excellent ambient stability, with the conductivity of 12-µm-thick films decreasing less than 25% upon 24 hour exposure to air (Fig. 6). This stability is induced by the combination of low LUMO energy level of below -3.9 eV, and self-encapsulation in the µm thick film which prevents the penetration of H₂O and O₂. The electrical conductivity of thinner films (< 100 nm) drops to 0.1 S/cm after 10 days in air, whereas a decrease of less than 10% over 120 days was observed when the thin films are stored in inert atmosphere (Fig. 7).

Fig. 8 depicts Seebeck coefficient of BBL with different dopants PEIₗᵢₙ and PEI_{bra}. As may be seen in Fig. 8, similar to PEDOT:PSS, BBL:PEI is also an excellent thermoelectric material with opposite polarity. The BBL:PEI composition shows large negative Seebeck coefficient of -480 to -65 µV/K, confirming that BBL:PEI is an n-type conductive polymer. The Seebeck coefficient decreases with increasing PEI content.

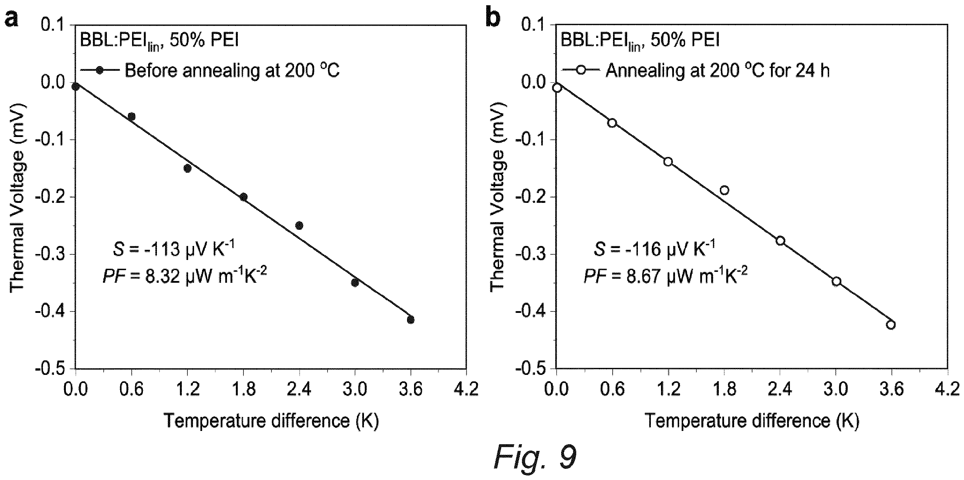

Thermal stability of the n-type conductive composition of the present invention represented by BBL:PEI, was studied. The thermal stability is crucial for applications that require continuous operation at high temperatures (such as solar cells or thermoelectrics). Remarkably, no degradation of the electrical conductivity or Seebeck coefficient was observed even after annealing for 24 hours at 200°C in inert atmosphere (see Fig. 6 and Fig. 9). In particular, Figs. 9a and 9b are thermoelectric plots of BBL:PEIₗᵢₙ films before and after being annealed at 200 °C for 24 hours, respectively. The electrical conductivity of the film is 6.53 S/cm before annealing and 6.49 S/cm after annealing, thus demonstrating an exceptional thermal stability of the thermoelectric properties of the material of the present invention.

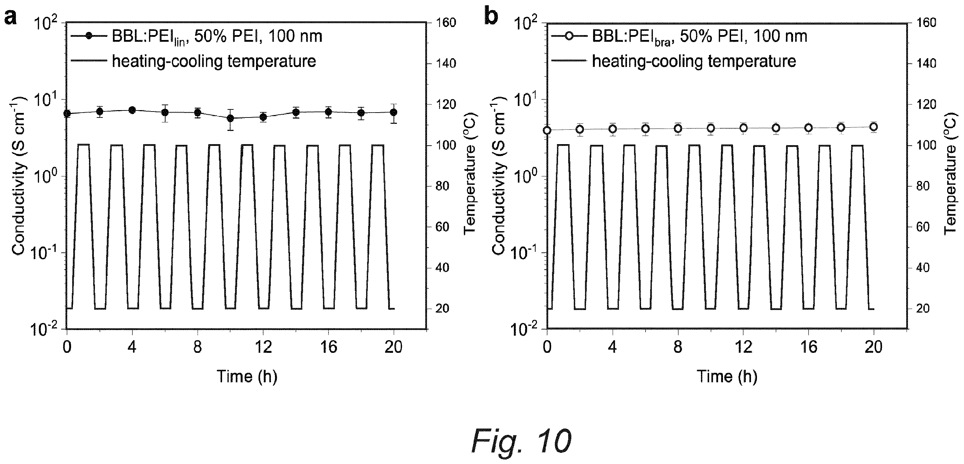

Also, cycling the temperature between 20°C and 100 °C did not show any sign of causing degradation even after 10 cycles (Fig. 10). Fig. 10a and 10b show 10 heating-cooling cycles between 20°C and 100°C for BBL:PEIₗᵢₙ and BBL:PEI_{bra}, respectively. Each of the temperature extremes were maintained for at least 10 min. As may be seen in Fig. 10, the conductivity remains stable for both films.

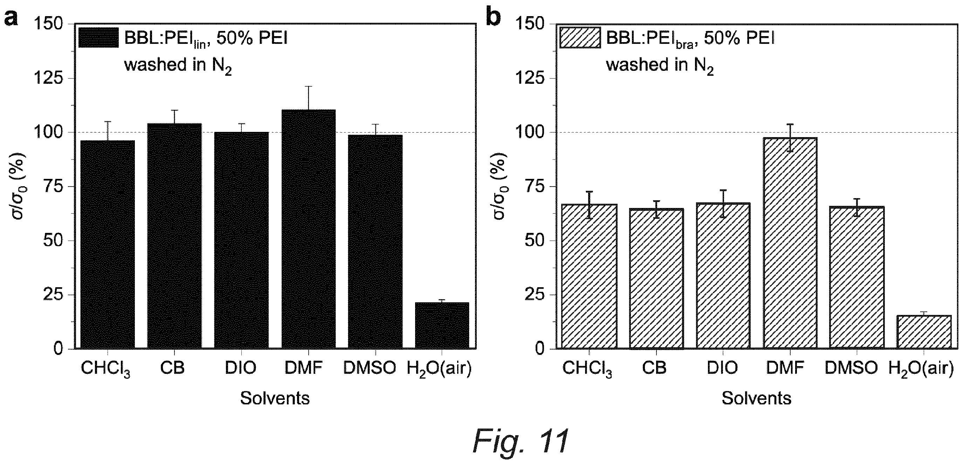

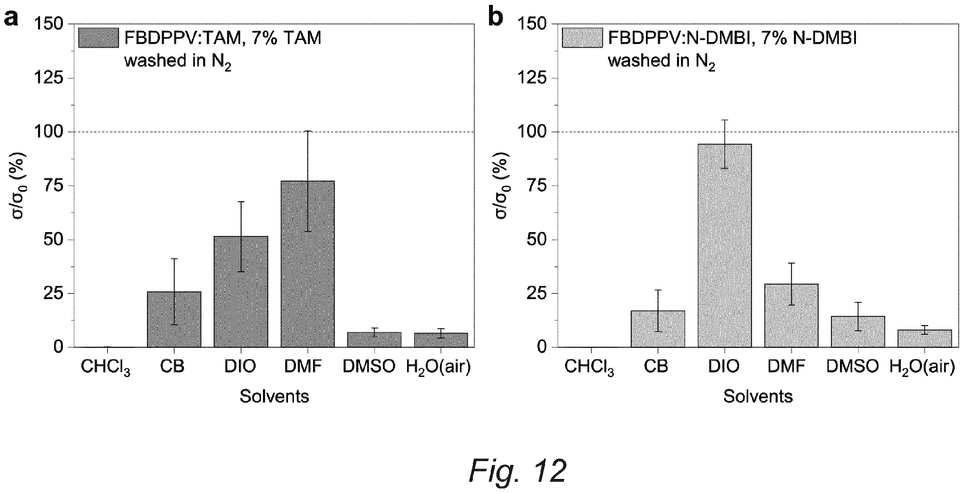

Next, the ability of BBL:PEI to maintain the high conductivity performance after washing the thin films with common organic solvents was studied (Fig. 11a and b). This is particularly important for the development of multi-stack films that can be used in optoelectronic devices, since overprinting of a layer implies a contact of the layer being overprinted with a solvent. The solvents being routinely used to process organic and hybrid active layers in solar cells and light-emitting diodes were investigated. The solvent was added to the surface of BBL:PEI film in an amount of 100 µl/cm². After 2-5 minutes, the solvent was removed. Electrical conductivity was then measured and compared to the values of the films before contact with the solvent. Because of the limited solubility of BBL in common organic solvents, BBL:PEI films can be washed with chloroform (CHCl₃), chlorobenzene (CB), 1,8-diiodooctane (DIO), dimethylformamide (DMF), and dimethylsulfoxide (DMSO), without affecting the conductivity, which is not the case for other high performing conducting polymers doped with common small molecules (Fig. 12). A more pronounced degradation of the conductivity performances is observed when BBL:PEI films are washed with water, with the conductivity decreasing about one order of magnitude but still being above 1.5 S/cm, which is even higher than that of PEDOT:PSS formulation which is typically used in solar cells. Nevertheless, as illustrated in Fig. 11b, a higher solvent stability was encountered with the linear version of PEI compared to the branched version.

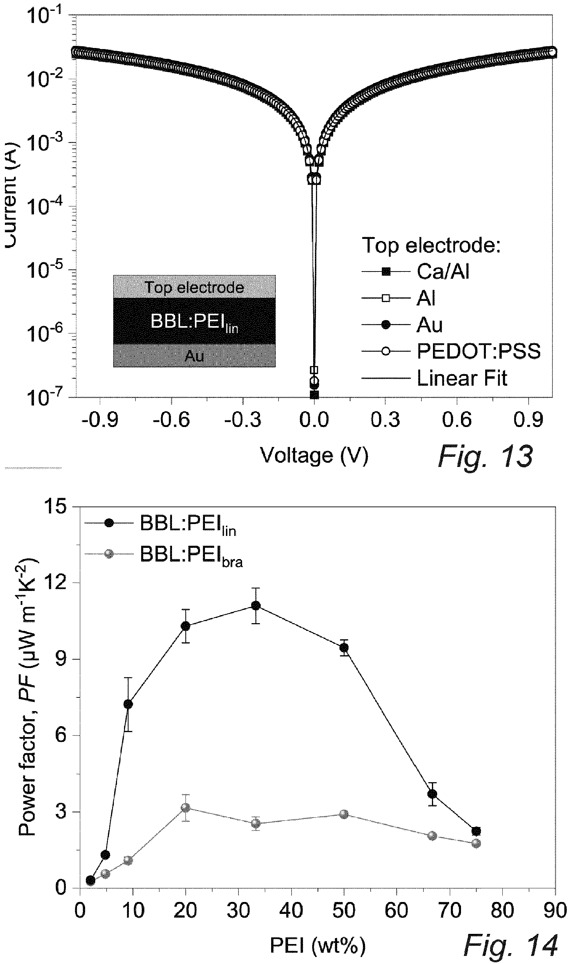

Fig. 13 shows current-voltage characteristics of BBL:PEIₗᵢₙ films (50 wt% PEI content) sandwiched between Au and various metal electrodes with work functions spanning from 5.1 eV (PEDOT:PSS) to 2.8 eV (Ca/AI). The BBL:PEIₗᵢₙ shows excellent Ohmic contact with electrode having various work functions.

Below, different applications of the n-type conductive composition according to the present invention will be described.

Thermoelectric generators (TEGs) had an in-plane geometry with one p/n-leg pair module prepared on a 25-µm-thick polyethylene naphthalate (PEN) substrate. For the p-leg, PEDOT:PSS (PH1000) was used, treated with DMSO (5% wt%). Considering the different electrical conductivity of secondary-doped PEDOT:PSS and BBL:PEI, the widths of the p/n legs were set to 2.5 mm/20 mm, respectively; the leg lengths and thicknesses were both 2.5 mm and 10 µm, respectively. First, the Cr/Au electrodes were evaporated to the PEN substrate through a shadow mask. Then, PEDOT:PSS and BBL:PEI legs were printed through spray-coating the relative dispersions in air. The samples were then annealed in nitrogen at 140°C, and followed by encapsulation with CYTOP. For TEGs with silver electrodes, the PEDOT:PSS and BBL:PEI legs were directly printed on PEN substrate in air, the silver paste was printed on the top of legs to form the electrodes. The samples were then annealed and encapsulated using the same method.

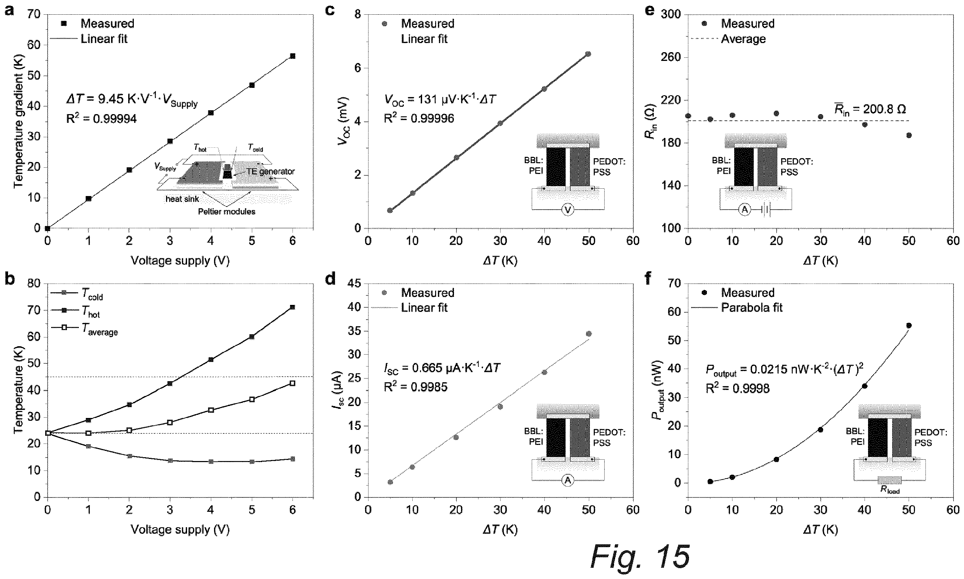

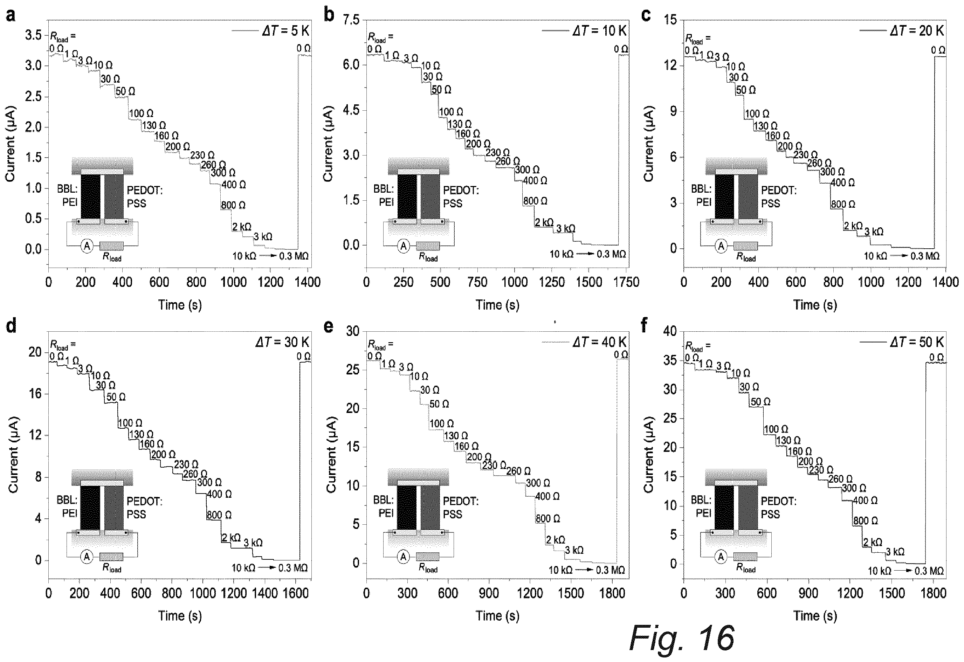

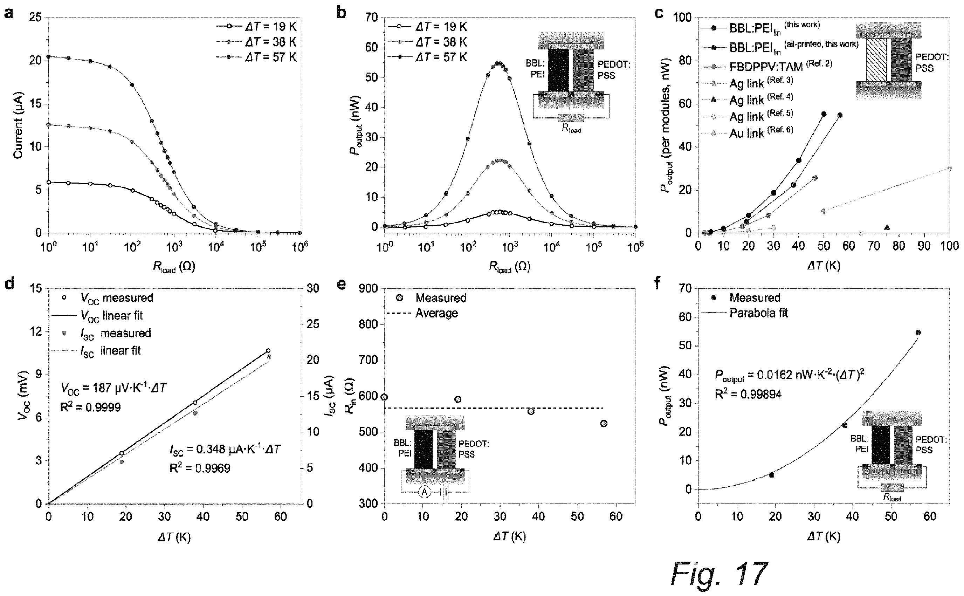

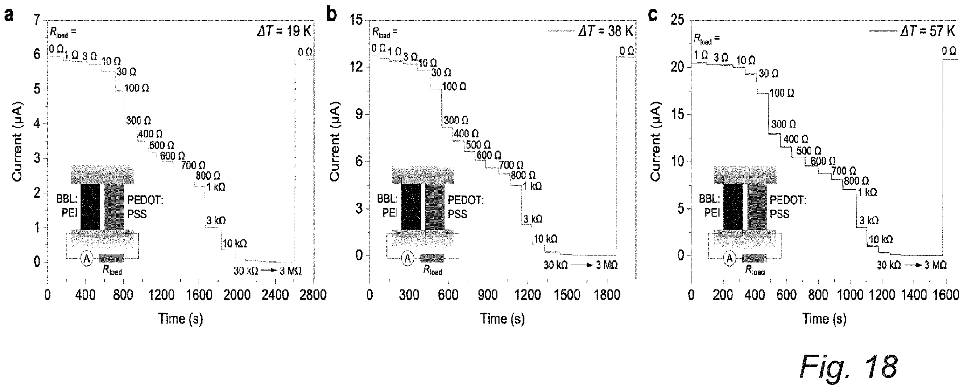

BBL:PEI presents maximum thermoelectric power factor over 11 µW m⁻¹ K⁻², with PEI content of 33% (Fig. 14). This thermoelectric power factor is among the highest for *n*-type polymers. With the extraordinary solution-processability, an all-printed polymer thermoelectric generator based on PEDOT:PSS *p*-leg and BBL:PEI (33% PEI content) *n*-leg is demonstrated. The all-polymer thermoelectric generator shows good output under temperature gradient (Δ*T*) from 5 K to 50 K at room temperature (Fig. 15). The generator has an open-circuit voltage (*V*_{OC}) linearly proportional to temperature gradient, with its Seebeck coefficient of 131 µV/K. The short-circuit current (*I*_{SC}) is also almost linearly proportional to temperature gradient, and inner resistance (*R*ᵢₙ) is always around 200 Ω. By connecting various load resistance (*R*_{load}; see Fig. 16), power output (*P*ₒᵤₜₚᵤₜ) were determined to be from 0.54 nW (Δ*T* = 5 K) to 56 nW (Δ*T* = 50 K), which show a good square relationship with the temperature gradient. These power output (per thermo module) are the highest among all in-plane geometry polymer thermoelectric generators, much higher than the polymer thermoelectric generator only with *p*-leg and metal connections. Similar results were also obtained by employing silver contacts (Figs. 17-18), enabling the fabrication of such module exclusively with printing techniques. This proves that the composition and the ink according to present invention may be considered as an indispensable complement to high-performance conductive polymer ink (like PEDOT:PSS).

Finally, BBL:PEI has been tested as an n-type organic mixed ionic-electronic conductor in OECTs.

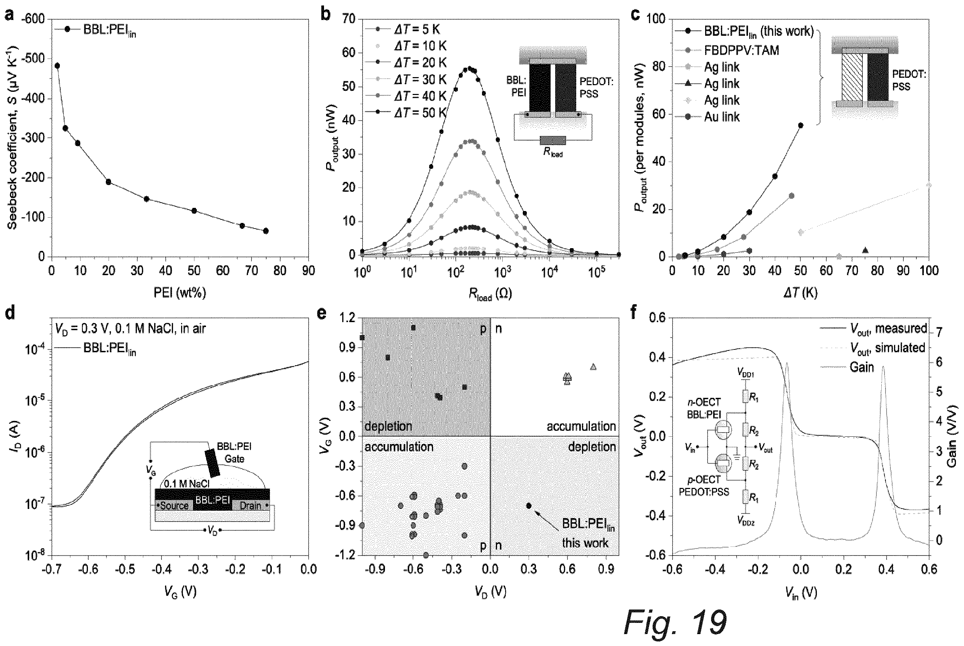

OECTs and ternary inverters were prepared as follows. OECTs had a lateral-gate geometry, and were fabricated on glass substrates (standard microscope glass). The substrates were washed by acetone, water, and isopropanol sequentially in ultrasonic bath and dried by nitrogen. Then, chromium/gold (5 nm/50 nm) were deposited on the substrates through shadow mask to form the source/drain electrodes with channel length *L* = 30 µm, channel width *W* = 1 mm. For n-type depletion mode OECT, a 50 nm-thick BBL:PEI channel and gate layer were spray-coated through shadow mask with gate size of 5 mm × 5 mm. The samples were annealed in nitrogen at 140 °C for 2 h and finally a protection tape insulating layer were added. For the p-type depletion mode OECT, PEDOT:PSS (containing 1 wt% of (3-glycidyloxypropyl)trimethoxysilane and 5 wt% of ethylene glycol) was homogenized in ultrasonic bath for 30 min then spin-coated at 4000 rpm on the substrate. The PEDOT:PSS layer were patterned by protection tape to form the channel and gate (gate size of 5 mm × 5 mm). The samples were annealed at 120 °C in air for 1 min and dipped into TAM52 ethanol solution (5-20 mg/mL) for 1 min. After annealing in nitrogen at 140 °C for 60 min, the samples were finally insulated by using a protection tape. For ternary inverter, one n-type OECT, one p-type OECT and four resistors (R1 = 820 kΩ and R2 =330 kΩ, Fig. 19e) were integrated through silver paste lines. The n-type, p-type OECTs and ternary inverters were tested in air with 0.1 M NaCl aqueous electrolyte.

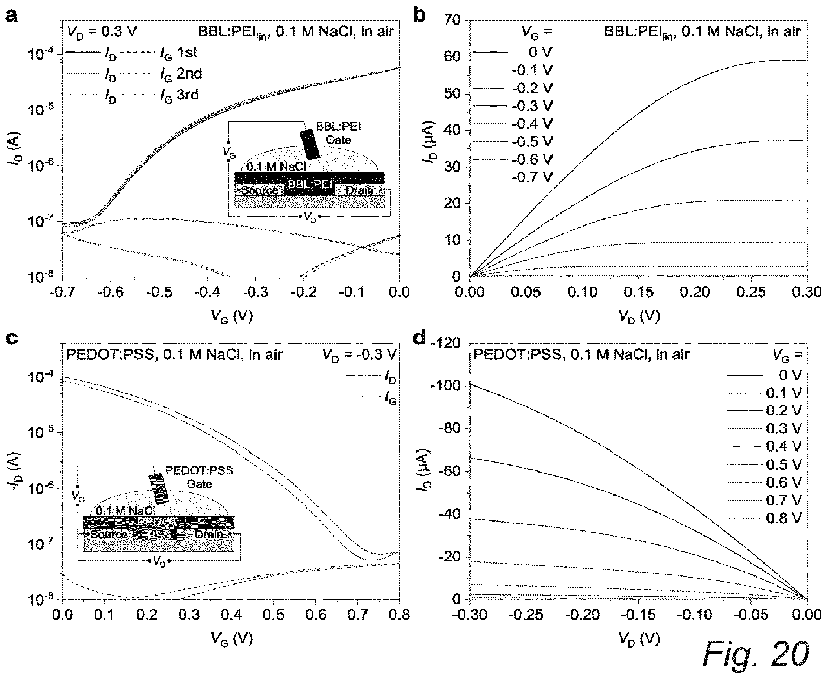

Since BBL:PEI films are conductive in their pristine state, the resulting n-type OECTs operate in the depletion mode. Fig. 19 shows the performances of a thermoelectric module integration BBL:PEI and PEDOT:PSS, the typical transfer characteristics of a BBL:PEI (50:50)-based OECT (transfer curve cycling, and output curves are displayed in Fig. 20) and its implementation in a ternary inverter geometry. Thus, Fig. 19a and 19b illustrate current and power output vs. load resistance recorded for different gradients of temperature. A transfer curve of BBL:PEI (50 wt%) based OECT measured in air with 0.1 M NaCl aqueous electrolyte, demonstrating n-type conduction behaviour in depletion mode. Fig. 19c shows the comparison of power output vs gradients of temperature in the context of the present invention with other planar thermoelectric modules present in the literature. Fig. 19d shows a transfer curve of BBL:PEI (50 wt%) based OECT measured in air with NaCl electrolyte, demonstrating n-type conduction behaviour in depletion mode. Fig. 19e depicts a *V*_{D}-*V*G map of the different regime present in the literature. Fig. 19f shows an output voltage and gain of the ternary inverter integrating PEDOT:PSS for the *p* side and BBL:PEI for the *n* side showing the 3 regimes and a gain of 6.

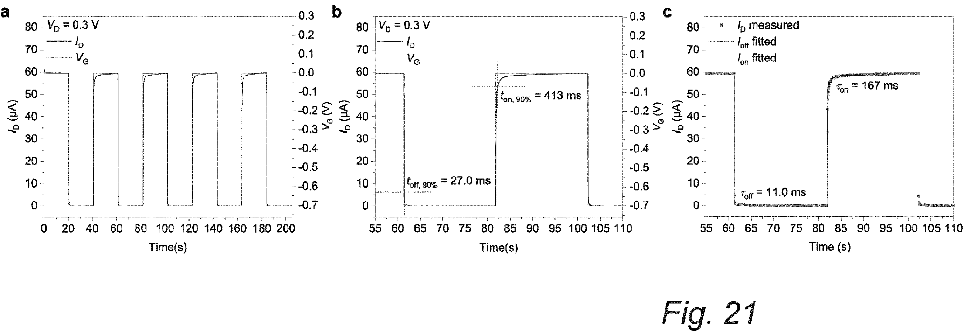

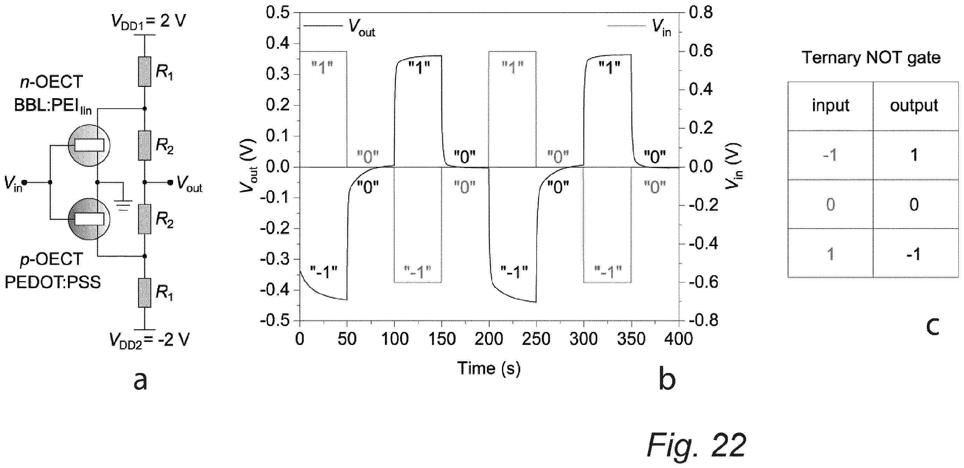

Note that, in analogy with PEDOT:PSS-based OECTs, BBL:PEI is used for both the channel and gate material. The source-drain current (*I*_{D}) is high at zero gate voltage (*V*_{G}) and decreases by 3 orders of magnitude when a negative voltage bias is applied to the gate. The maximum transconductance is 0.38 mS at *V*_{G} = 0 V. In addition, the device shows excellent cycling stability and fast response times of 167 ms and 11 ms for τₒₙ and τ_{off}, respectively (Fig. 21). Note that n-type depletion-mode OECTs have not been realized before (see Fig. 21b) and their demonstration complements the current OECT technologies by bringing a new paradigm of logic circuitry. As an example, a n-type BBL:PEI-based OECT was paired to a p-type PEDOT:PSS-based OECT, both working in the depletion-mode of operation, which demonstrated the first OECT-based ternary logic gate. This balanced ternary inverter can process three bits of information ('+1', '0', and '-1'). Fig. 21c shows the ternary inverter layout and its voltage transfer characteristics, with a clear balanced ternary logic operation (Fig. 22). During the two transition periods, the inverter exhibits similar gain (of up to 6) at *V*ᵢₙ = -0.07 /0.38 V, respectively. The dash line in Fig. 21c shows the simulated voltage transfer characteristics of the ternary inverter, which are in good agreement with the measured data. Notice that this OECT ternary inverter have a comparable performance with silicon-based tunnelling ternary inverter, with even higher voltage gain (Fig. 22).

In conclusion, it has been shown that the present invention provides a formulation of a polymeric ink that allows high n-type conductivity when processed through large-scale deposition method. The enhanced conductivity is attributed to a charge transfer mechanism occurring between the electron-rich amine in PEI to the acceptor polymer BBL, reaching a charge density up to 10²⁰ cm⁻³ for the branched version. The n-type conductive composition of the present invention shows exceptional air and thermal stability, allowing it to be implemented in optoelectronic devices. For these purposes, the n-type conductive composition was used in a practical application such as OECT and record-breaking thermoelectric devices. The present invention provides the first example of an n-type depletion mode OECT device that was further integrated into a ternary logic inverter. Due to its remarkable characteristics, the unique ink of the present invention will unlock new potentials for all-organic optoelectronic and bioelectronic devices.

## Claims

1. An n-type conductive composition comprising:
a rigid conjugated polymer having a dihedral angle from 0° to 20° and
an n-type polymeric cation.

2. The composition according to claim 1, wherein said rigid conjugated polymer is a conjugated ladder-type polymer.

3. The composition according to claim 2, wherein said conjugated ladder-type polymer is poly(benzimidazobenzophenanthroline) (BBL).

4. The composition according to claim 3, wherein said BBL comprises from 2 to 10000, more preferably from 2 to 100, most preferably from 30 to 50 repetitive units.

5. The composition according to any one of the preceding claims, wherein said rigid conjugated polymer has lowest unoccupied molecular orbital (LUMO) energy level E_{LUMO} below -3.9 eV.

6. The composition according to any one of the preceding claims, wherein said n-type polymeric cation is poly(ethyleneimine) (PEI).

7. The composition according to claim 6, wherein said PEI is linear, branched or ethoxylated PEI and comprises from 2 to 10000, preferably from 5 to 1000, more preferably from 50 to 100 repetitive units.

8. The composition according to any one of the preceding claims, wherein a mass ratio polymeric cation/(polymeric cation + rigid conjugated polymer) is from 0.01% to 99.99%, preferably from 0.1% to 90%, more preferably from 1% to 75%, most preferably from 20% to 50%.

9. The composition according to any one of the preceding claims, wherein said composition has a conductivity of at least 10⁻³ S/cm, preferably at least 1 S/cm.

10. The composition according to any one of the preceding claims, wherein said composition is in the form of a thermally annealed thin film.

11. An n-type conductive ink comprising the composition according to any one of the preceding claims and a non-halogenated polar solvent.

12. The n-type conductive ink according to claim 11, wherein said non-halogenated polar solvent is a protic solvent.

13. The n-type conductive ink according to claim 11 or 12, wherein a concentration of said rigid conjugated polymer and said polymeric cation in said ink is from 0.001 to 200 g/l, preferably from 0.01 to 10 g/l, more preferably from 0.05 to 1 g/l.

14. The n-type conductive ink according to any one of claims 11-13, wherein said ink is processable through large-area techniques.

15. An organic optical or electronic device comprising the n-type conductive composition according to any one of claims 1-10.

## Patentansprüche

1. N-leitende Zusammensetzung, umfassend:
ein starres konjugiertes Polymer, das einen Diederwinkel von 0° bis 20° aufweist, und
ein n-leitendes polymeres Kation.

2. Zusammensetzung nach Anspruch 1, wobei das starre konjugierte Polymer ein konjugiertes Leiterpolymer ist.

3. Zusammensetzung nach Anspruch 2, wobei das konjugierte Leiterpolymer Polybenzimidazobenzophenanthrolin (BBL) ist.

4. Zusammensetzung nach Anspruch 3, wobei das BBL von 2 bis 10000, bevorzugter von 2 bis 100, am bevorzugtesten von 30 bis 50 Wiederholeinheiten umfasst.

5. Zusammensetzung nach einem der vorhergehenden Ansprüche, wobei das Energieniveau E_{LUMO} des niedrigsten unbesetzten Molekülorbitals (LUMO) des starren konjugierten Polymers unter -3,9 eV liegt.

6. Zusammensetzung nach einem der vorhergehenden Ansprüche, wobei das n-leitende polymere Kation Polyethylenimin (PEI) ist.

7. Zusammensetzung nach Anspruch 6, wobei das PEI unverzweigtes, verzweigtes oder ethoxyliertes PEI ist und von 2 bis 10000, bevorzugt von 5 bis 1000, bevorzugter von 50 bis 100 Wiederholeinheiten umfasst.

8. Zusammensetzung nach einem der vorhergehenden Ansprüche, wobei ein Masseverhältnis polymeres Kation/(polymeres Kation + starres konjugiertes Polymer) von 0,01% bis 99,99%, bevorzugt von 0,1% bis 90%, bevorzugter von 1% bis 75%, am bevorzugtesten von 20% bis 50% beträgt.

9. Zusammensetzung nach einem der vorhergehenden Ansprüche, wobei die Zusammensetzung eine Leitfähigkeit von mindestens 10⁻³ S/cm, bevorzugt mindestens 1 S/cm aufweist.

10. Zusammensetzung nach einem der vorhergehenden Ansprüche, wobei die Zusammensetzung in Form eines getemperten dünnen Films vorliegt.

11. N-leitende Tinte, die die Zusammensetzung nach einem der vorhergehenden Ansprüche und ein nicht halogeniertes polares Lösungsmittel umfasst.

12. N-leitende Tinte nach Anspruch 11, wobei das nicht halogenierte polare Lösungsmittel ein protisches Lösungsmittel ist.

13. N-leitende Tinte nach Anspruch 11 oder 12, wobei eine Konzentration des starren konjugierten Polymers und des polymeren Kations in der Tinte von 0,001 bis 200 g/l, bevorzugt von 0,01 bis 10 g/l, bevorzugter von 0,05 bis 1 g/l beträgt.

14. N-leitende Tinte nach einem der Ansprüche 11-13, wobei die Tinte mit großflächigen Verfahren verarbeitbar ist.

15. Organische optische oder elektronische Vorrichtung, die die n-leitende Zusammensetzung nach einem der Ansprüche 1-10 umfasst.

## Revendications

1. Composition conductrice de type n comprenant :
un polymère conjugué rigide ayant un angle dièdre de 0° à 20° et
un cation polymérique de type n.

2. Composition selon la revendication 1, ledit polymère conjugué rigide étant un polymère de type échelle conjugué.

3. Composition selon la revendication 2, ledit polymère de type échelle conjugué étant une poly(benzimidazobenzophénanthroline) (BBL).

4. Composition selon la revendication 3, ledit BBL comprenant de 2 à 10 000, plus préférablement de 2 à 100, plus préférablement de 30 à 50 motifs répétitifs.

5. Composition selon l'une quelconque des revendications précédentes, ledit polymère conjugué rigide ayant un niveau d'énergie d'orbite moléculaire non occupée la plus basse (LUMO) E_{LUMO} inférieur à -3,9 eV.

6. Composition selon l'une quelconque des revendications précédentes, ledit cation polymérique de type n étant une poly(éthylèneimine) (PEI).

7. Composition selon la revendication 6, ladite PEI étant une PEI linéaire, ramifiée ou éthoxylée et comprenant de 2 à 10 000, préférablement de 5 à 1 000, plus préférablement de 50 à 100 motifs répétitifs.

8. Composition selon l'une quelconque des revendications précédentes, un rapport en masse de cation polymérique/(cation polymérique + polymère conjugué rigide) étant de 0,01 % à 99,99 %, préférablement de 0,1 % à 90 %, plus préférablement de 1 % à 75 %, le plus préférablement de 20 % à 50 %.

9. Composition selon l'une quelconque des revendications précédentes, ladite composition ayant une conductivité d'au moins 10⁻³ S/cm, préférablement d'au moins 1 S/cm.

10. Composition selon l'une quelconque des revendications précédentes, ladite composition étant sous la forme d'un film fin recuit thermiquement.

11. Encre conductrice de type n comprenant la composition selon l'une quelconque des revendications précédentes et un solvant polaire non halogéné.

12. Encre conductrice de type n selon la revendication 11, ledit solvant polaire non halogéné étant un solvant protique.

13. Encre conductrice de type n selon la revendication 11 ou 12, une concentration dudit polymère conjugué rigide et dudit cation polymérique dans ladite encre étant de 0,001 à 200 g/l, préférablement de 0,01 à 10 g/l, plus préférablement de 0,05 à 1 g/l.

14. Encre conductrice de type n selon l'une quelconque des revendications 11 à 13, ladite encre pouvant être traitée par l'intermédiaire de techniques à grande surface.

15. Dispositif organique optique ou électronique comprenant la composition conductrice de type n selon l'une quelconque des revendications 1 à 10.
